# EUROPEAN PATENT APPLICATION

(11) **EP 4 319 464 A1**
(43) Date of publication of application: **07.02.2024**
(21) Application number: 21934037.9
(22) Date of filing: 01.04.2021
(51) Int. Cl.: H04W 76/27, H04W 74/00, H04W 52/02

(54) **PROCESSING METHOD AND APPARATUS FOR ROLLBACK FROM SMALL DATA TRANSMISSION (SDT) TO NON-SDT**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2021/085118
(87) International publication number: WO 2022/205380

(57) **Abstract**

Disclosed in the embodiments of the present application are a processing method and apparatus for rollback from small data transmission (SDT) to non-SDT, which can be applied to cellular mobile communication technology. The method comprises: during an SDT process of a terminal device, when it is determined that a designated trigger condition is satisfied, performing rollback from the SDT process to a non-SDT process. Therefore, a terminal device can perform rollback from an SDT process to a non-SDT process before the SDT process is completed, such that the terminal device performs data transmission on the basis of the non-SDT

## Description

### TECHNICAL FIELD

The disclosure relates to a field of communication technologies, in particular to, a processing method for rolling back from a small data transmission (SDT) to a non-SDT and a processing apparatus for rolling back from an SDT to a non-SDT.

### BACKGROUND

In wireless communication technologies, a terminal device can transmit small data to a network device through an SDT mechanism. Currently, after a Random Access Channel (RACH) process of SDT is completed, the terminal device can establish a Radio Resource Control (RRC) connection based on traffic requirements and transmit new uplink data based on the established RRC connection. That is, after an SDT process is completed, the terminal device communicates with the network device based on a non-SDT process. However, the above method of switching to the non-SDT process after the SDT process is completed may cause a transmission traffic delay and may affect a smooth progression of the communication process.

### SUMMARY

Embodiments of the disclosure provide a processing method for rolling back from an SDT to a non-SDT and a processing apparatus for rolling back from an SDT to a non-SDT, which can be applied to communication between a terminal device and a network device in cellular mobile communication technologies, so that the terminal device can roll back from the SDT process to the non-SDT process before the SDT process is completed, to transmit data based on the non-SDT process, thereby facilitating reducing a traffic transmission delay.

According to a first aspect of embodiments of the disclosure, a processing method for rolling back from an SDT to a non-SDT, performed by a terminal device, is provided. The method includes: in response to satisfying a specified trigger condition during the SDT process, rolling back from the SDT process to the non-SDT process.

In the technical solution, during the SDT process, the terminal device can roll back from the SDT process to the non-SDT process when it is determined that the specified trigger condition is satisfied, so that the terminal device can roll back from the SDT process to the non-SDT process before the SDT process is completed. Therefore, the terminal device can perform data transmission based on the non-SDT process, which is beneficial to reducing the traffic transmission delay.

In a possible implementation, rolling back from the SDT process to the non-SDT process, includes: processing connection configuration corresponding to the SDT process according to a connection configuration requirement of the non-SDT process.

In a possible implementation, processing the connection configuration corresponding to the SDT process according to the connection configuration requirement of the non-SDT process, includes at least one of the following processing actions: processing a radio bearer (RB) for resuming a data transmission in the SDT process according to an RB requirement of the non-SDT process; resetting a medium access control (MAC) entity corresponding to the SDT process according to a MAC entity requirement of the non-SDT process; restarting a timer used in the SDT process or starting a new timer, according to a timer requirement of the non-SDT process; or processing a connection resume request message corresponding to the SDT process according to a connection resume request message requirement of the non-SDT process.

Optionally, the RB requirement includes any one of the followings: suspending the RB; or processing a Packet Data Convergence Protocol (PDCP) entity of the RB.

In a possible implementation, processing the PDCP entity of the RB, includes any one of the followings: re-establishing the PDCP entity of the RB according to PDCP entity configuration information corresponding to the non-SDT process; or in response to a radio resource control (RRC) connection being established in the non-SDT process, transmitting data packets of the PDCP entity of the RB.

In a possible implementation, transmitting the data packets of the PDCP entity of the RB, includes any one of the followings: in response to a transmission mode corresponding to the RB being an unacknowledged mode (UM), transmitting a data packet not sent yet in the data packets of the PDCP entity of the RB; or in response to a transmission mode corresponding to the RB being an acknowledged mode, transmitting a data packet not sent yet and/or a data packet already sent but not confirmed to be successfully received in the data packets of the PDCP entity of the RB.

Optionally, the connection resume request message requirement includes any one of the followings: regenerating the connection resume request message corresponding to the SDT process according to security configuration information; or reusing the connection resume request message used in the SDT process.

In a possible implementation, the trigger condition includes any one of the followings: receiving indication information sent by a network device, wherein the indication information is configured to instruct the terminal device to roll back from the SDT process to the non-SDT process; determining that a number of data transmissions in the SDT process reaches a first threshold; determining that an amount of transmitted data corresponding to a data radio bearer in the SDT process reaches a second threshold; determining that a signal quality corresponding to a cell or a beam supporting the SDT process reaches a third threshold; determining that a signal strength corresponding to a cell or a beam supporting the SDT process reaches a fourth threshold; or determining that a resource state of a configured grant (CG) physical uplink shared channel (PUSCH) resource that supports the SDT process is in an unavailable state.

In an optional implementation, determining that the resource state of the CG PUSCH resource that supports the SDT process is in the unavailable state, includes any one of the followings: in response to identifying reselection from a cell that supports the CG PUSCH resource to a cell that does not support the CG PUSCH resource, determining that the resource state of the CG PUSCH resource that supports the SDT process is in the unavailable state; or in response to identifying invalidity of an uplink timing advance (TA) of the CG PUSCH resource, determining that the resource state of the CG PUSCH resource that supports the SDT process is in the unavailable state.

Optionally, the indication message further includes the security configuration information.

In a possible implementation, the security configuration information includes at least one of the followings: a security algorithm, a security key, a next hop chaining count for updating the security key, or a next hop count for updating the security key.

According to a second aspect of embodiments of the disclosure, another processing method for rolling back from an SDT to a non-SDT, performed by a network device, is provided. The method includes: sending indication information to a terminal device, in which the indication information is configured to instruct the terminal device to roll back from the SDT process to the non-SDT process during the SDT process.

In the technical solution, during the SDT process performed by the terminal device, the network device can instruct the terminal device to roll back from the SDT process to the non-SDT process, so that the terminal device can roll back from the SDT process to the non-SDT process before the SDT process is completed. Therefore, the terminal device can perform data transmission based on the non-SDT process, which is beneficial to reducing the traffic transmission delay.

In a possible implementation, the indication message further includes security configuration information.

In a possible implementation, the security configuration information includes at least one of the followings: a security algorithm, a security key, a next hop chaining count for updating the security key, or a next hop count for updating the security key.

According to a third aspect of embodiments of the disclosure, a processing apparatus for rolling back from an SDT to a non-SDT is provided. The processing apparatus for rolling back from an SDT to a non-SDT can realize some or all of the functions of the terminal device in the method described in the first aspect above. For example, the processing apparatus can realize the functions of part of or all the embodiments of the disclosure, or it can realize the function of any one of the embodiments of the disclosure alone. The functions may be realized by hardware or by using hardware to execute corresponding software. The hardware or software includes one or more units or modules corresponding to the above functions.

According to a fourth aspect of embodiments of the disclosure, another processing apparatus for rolling back from an SDT to a non-SDT is provided. The processing apparatus for rolling back from an SDT to a non-SDT can realize some or all of the functions of the network device in the method described in the second aspect above. For example, the processing apparatus can realize the functions of part of or all the embodiments of the disclosure, or it can realize the function of any one of the embodiments of the disclosure alone. The functions may be realized by hardware or by using hardware to execute corresponding software. The hardware or software includes one or more units or modules corresponding to the above functions.

According to a fifth aspect of embodiments of the disclosure, a processing apparatus for rolling back from an SDT to a non-SDT is provided. The processing apparatus includes: a processor. When the processor calls computer programs stored in a memory, the method described in the first aspect above is implemented.

According to a sixth aspect of embodiments of the disclosure, a processing apparatus for rolling back from an SDT to a non-SDT is provided. The processing apparatus includes: a processor. When the processor calls computer programs stored in a memory, the method described in the second aspect above is implemented.

According to a seventh aspect of embodiments of the disclosure, a processing apparatus for rolling back from an SDT to a non-SDT is provided. The processing apparatus includes: a processor and a memory having computer programs stored thereon. When the processor executes the computer programs stored in the memory, the processing apparatus is caused to implement the method described in the first aspect above.

According to an eighth aspect of embodiments of the disclosure, a processing apparatus for rolling back from an SDT to a non-SDT is provided. The processing apparatus includes: a processor and a memory having computer programs stored thereon. When the processor executes the computer programs stored in the memory, the processing apparatus is caused to implement the method described in the second aspect above.

According to a ninth aspect of embodiments of the disclosure, a processing apparatus for rolling back from an SDT to a non-SDT is provided. The processing apparatus includes: a processor and an interface circuit. The interface circuit is configured to receive code instructions and transmit them to the processor. The processor is configured to run the code instructions to cause the processing apparatus to implement the method described in the first aspect above.

According to a tenth aspect of embodiments of the disclosure, a processing apparatus for rolling back from an SDT to a non-SDT is provided. The processing apparatus includes: a processor and an interface circuit. The interface circuit is configured to receive code instructions and transmit them to the processor. The processor is configured to run the code instructions to cause the processing apparatus to implement the method described in the second aspect above.

According to an eleventh aspect of embodiments of the disclosure, a communication system is provided. The system includes: the processing apparatus of the third aspect and the processing apparatus of the fourth aspect, or includes the processing apparatus of the fifth aspect and the processing apparatus of the sixth aspect, or includes the processing apparatus of the seventh aspect and the processing apparatus of the eighth aspect, or includes the processing apparatus of the ninth aspect and the processing apparatus of the tenth aspect.

According to a twelfth aspect of embodiments of the disclosure, a computer-readable storage medium having instructions to be used by the above network device stored thereon is provided. When the instructions are executed, the terminal device is caused to implement the method of the first aspect.

According to a thirteenth aspect of embodiments of the disclosure, a readable storage medium having instructions to be used by the above terminal device stored thereon is provided. When the instructions are executed, the network device is caused to implement the method of the second aspect.

According to a fourteenth aspect of embodiments of the disclosure, a computer program product including computer programs is provided. When the computer programs are run on a computer, the computer is caused to implement the method of the first aspect.

According to a fifteenth aspect of embodiments of the disclosure, a computer program product including computer programs is provided. When the computer programs are run on a computer, the computer is caused to implement the method of the second aspect.

According to a sixteenth aspect of embodiments of the disclosure, a chip system is provided. The chip system includes at least one processor and an interface for supporting the network device in realizing the functions involved in the first aspect, e.g., determining and processing data and/or information involved in the method described above. In a possible design, the chip system further includes a memory, which is configured to store computer programs and data necessary for the network device. The chip system may consist of chips or may include chips and other discrete devices.

According to a seventeenth aspect of embodiments of the disclosure, a chip system is provided. The chip system includes at least one processor and an interface for supporting the terminal device in realizing the functions involved in the second aspect, e.g., determining and processing data and/or information involved in the method described above. In a possible design, the chip system further includes a memory, which is configured to store computer programs and data necessary for the terminal device. The chip system may consist of chips or may include chips and other discrete devices.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments of the disclosure or the background technologies is given below.
FIG. 1 is a schematic diagram of a communication system provided by an embodiment of the disclosure.
FIG. 2 is a flowchart of a processing method for rolling back from an SDT to a non-SDT provided by an embodiment of the disclosure.
FIG. 3 is a flowchart of a processing method for rolling back from an SDT to a non-SDT provided by another embodiment of the disclosure.
FIG. 4 is a flowchart of a processing method for rolling back from an SDT to a non-SDT provided by another embodiment of the disclosure.
FIG. 5 is a flowchart of a processing method for rolling back from an SDT to a non-SDT provided by another embodiment of the disclosure.
FIG. 6 is a flowchart of a processing method for rolling back from an SDT to a non-SDT provided by another embodiment of the disclosure.
FIG. 7 is a block diagram of a processing apparatus for rolling back from an SDT to a non-SDT provided by an embodiment of the disclosure.
FIG. 8 is a block diagram of a processing apparatus for rolling back from an SDT to a non-SDT provided by another embodiment of the disclosure.
FIG. 9 is a schematic diagram of a chip provided by an embodiment of the disclosure.

### DETAILED DESCRIPTION

In order to better understand the processing method for rolling back from an SDT to a non-SDT provided in the embodiments of the disclosure, the communication system applicable to the embodiments of the disclosure is first described below.

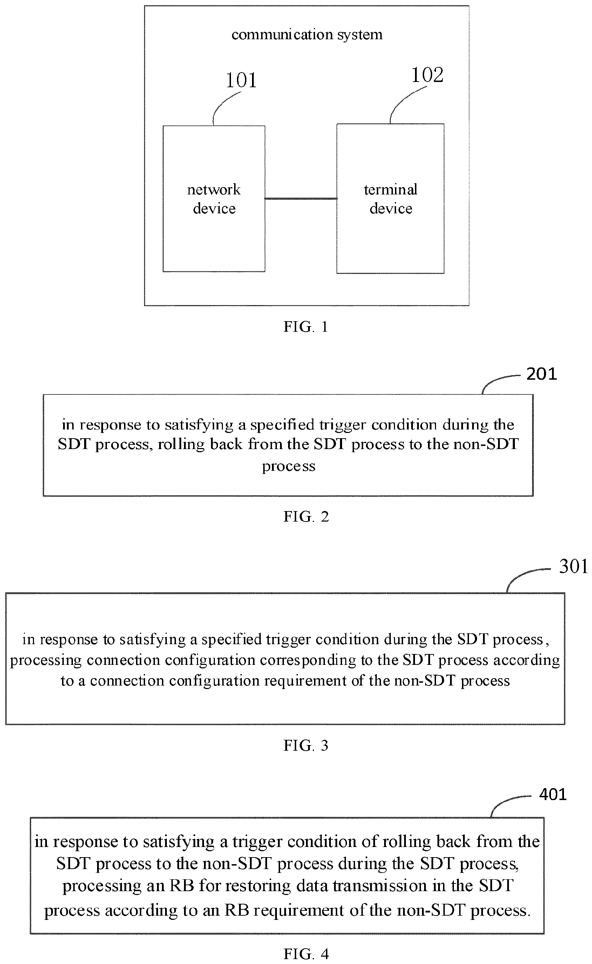

As illustrated in FIG. 1, FIG. 1 is a schematic diagram of a communication system provided by an embodiment of the disclosure. The communication system may include, but is not limited to, a network device and a terminal device. The number and form of devices shown in FIG. 1 are only for illustration and do not constitute a limitation on the embodiments of the disclosure, and two or more network devices and two or more terminal devices may be included in practical applications. The communication system shown in FIG. 1 includes, for example, one network device 101 and one terminal device 102.

It should be noted that the technical solutions of the embodiments of the disclosure can be applied to various types of communication systems, such as, a long term evolution (LTE) system, a 5th generation (5G) mobile communication system, a 5G new radio (NR) system, or other future new mobile communication systems.

The network device 101 in the embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device provided by the embodiments of the disclosure may be composed of a central unit (CU) and a distributed unit (DU). The CU may also be called control unit. The use of CU-DU structure can separate the protocol layers of the network device, such as a base station, place functions of some protocol layer under centralized control of the CU, and distribute functions of the remaining protocol layers or all protocol layers in the DU to be centrally controlled by the CU.

The terminal device 102 in the embodiments of the disclosure is an entity on a user side for receiving or transmitting signals, such as a cellular phone. The terminal device may also be referred to as terminal, user equipment (UE), mobile station (MS), mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

In the above communication system, the terminal device usually utilizes a non-SDT process to transmit data with the network device after the SDT process is completed and in the case where the terminal device has a demand for the non-SDT process. However, this approach tends to cause a larger traffic transmission delay, which affects a smooth progression of the communication process.

In embodiment of the disclosure, during the SDT process, the terminal device rolls back from the SDT process to the non-SDT process when it is determined that a specified trigger condition is satisfied, so that the terminal device can roll back from the SDT process to the non-SDT process before the SDT process is completed. Therefore, the terminal device carries out data transmission based on the non-SDT process, which is beneficial to reducing the traffic transmission delay.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as system architectures evolve and new business scenarios emerge, the technical solutions provided by the embodiments of the disclosure are also applicable to similar technical problems.

A processing method for rolling back from an SDT to a non-SDT and a processing apparatus for rolling back from an SDT to a non-SDT provided in the disclosure are described in detail below in combination with the accompanying drawings.

As illustrated in FIG. 2, FIG. 2 is a flowchart of a processing method for rolling back from an SDT to a non-SDT provided by an embodiment of the disclosure. The method is applied to the terminal device in the communication system shown in FIG. 1. That is, the method is executed by the terminal device in the communication system shown in FIG. 1. As illustrated in FIG. 2, the method may include, but is not limited to, the following steps.

At step S201, in response to satisfying a specified trigger condition during an SDT process, the non-SDT process is rolled back from the SDT process.

In some embodiments, small data can be transmitted to the network device during the SDT process via a third message Msg3 in a four-step random access process.

In some embodiments, small data can be transmitted to the network device during the SDT process via a first message MsgA in a two-step random access process.

In some embodiments, during the SDT process, small data can be transmitted to the network device via a configured grant (CG) physical uplink shared channel (PUSCH) resource.

The CG PUSCH resource can be pre-configured by the network device for the terminal device.

The non-SDT process means that during a random access process of an initial access, no traffic data is sent but only a radio resource control (RRC) message of a Common Control Channel (CCCH) is sent. After the RRC connection is resumed, traffic data is transmitted.

The above specified trigger condition is a condition that triggers a rollback from the SDT process to the non-SDT process.

In some embodiments, the above trigger condition may be: receiving indication information sent by the network device, in which the indication information is configured to instruct the terminal device to roll back from the SDT process to the non-SDT process.

In other embodiments, the above trigger condition may be: determining that a number of data transmissions in the SDT process reaches a first threshold.

In a possible implementation, the above first threshold may be configured by the network device for the terminal device, or may be determined by the terminal device based on a communication standard used for communication with the network device. The method of obtaining the first threshold is not specifically limited in the embodiments.

In other embodiments, the above trigger condition may be: determining that an amount of transmitted data corresponding to a data radio bearer (RB) in the SDT process reaches a second threshold.

The above DRB is configured to send traffic data of the terminal device.

The above DRB is configured to send the traffic data of the terminal device.

For example, the network configures that the SDT can be selected to send uplink data of DRB-1, the amount of the uplink data needs to be less than or equal to 1000 bytes (i.e., the second threshold). If 500 bytes of uplink data has arrived at the DRB-1, the SDT process can be selected. However, if before the uplink data is successfully sent in the SDT process, 600 bytes of additional data arrives at the DRB-1, and in this case, the amount of data to be sent by the DRB-1 is 1100 bytes, which exceeds 1000 bytes configured by the network, i.e., exceeds the second threshold configured by the network, and thus it can be determined that the trigger condition of rolling back from the SDT process to the non-SDT process is satisfied.

It is understood that in order to support data sending and receiving of the terminal device, different types of data may be sent and received via different RBs.

The RB in the embodiment may include the DRB and a signaling radio bearer (SRB).

The above SRB is configured to send an RRC control signaling.

The SRBs can be classified into SRB0, SRB1, SRB2 and SRB3.

The SRB0 is configured to send an RRC message of a CCCH.

The SRB1 is configured to send an RRC message of a Dedicated Control Channel (DCCH), which can carry a Non-Access Stratum (NAS) message. It is also configured to send a NAS message before the SRB2 is established.

The SRB2 is configured to send a NAS message of a DCCH logical channel and an RRC message containing path measurement information.

It should be noted that the above SRB2 has a lower priority than the SRB1 and is configured by the network side after the Access Stratum (AS) is activated safely.

The SRB3 is configured to send the RRC message of the DCCH logical channel of a Secondary Cell Group (SCG) when the terminal device is configured with a non-independent networking mode. The above non-independent networking mode may include a EUTRA-NR Dual Connection (EN-DC) with 4G as a primary node and 5G as a secondary node, and a New Radio Dual Connection (NR-DC) with 5G as the primary node and 4G as the secondary node.

In a possible implementation, the above second threshold may be configured by the network device for the terminal device, or may be determined by the terminal device based on a communication standard used for communication with the network device. The method of obtaining the second threshold in not specifically limited in the embodiments.

In other embodiments, a signal quality corresponding to a cell or a beam supporting the SDT process reaches a third threshold.

In a possible implementation, the above third threshold may be configured by the network device for the terminal device, or may be determined by the terminal device based on a communication standard used for communication with the network device. The method of obtaining the third threshold in not specifically limited in the embodiments.

In some embodiments, the signal quality described above may be a Reference Signal Received Power (RSRP).

In other embodiments, a signal strength corresponding to a cell or a beam supporting the SDT process reaches a fourth threshold.

In some embodiments, the above signal strength may be an RSRP.

In a possible implementation, the above beam may be determined based on Synchronous Signal Block (SSB) information.

In another possible implementation, the above beam may be determined based on Channel State Information-Reference Signal (CSI-RS) information.

In another possible implementation, the above beam may be determined based on SSB information and CSI-RS information.

As an exemplary implementation, the network device may send configuration information to the terminal device. The configuration information may include SSB information and/or CSI-RS information. Correspondingly, the terminal device may determine the corresponding beam based on the SSB information and/or CSI-RS information.

In a possible implementation, the above fourth threshold may be configured by the network device for the terminal device, or may be determined by the terminal device based on a communication standard used for communication with the network device. The method of obtaining the fourth threshold in not specifically limited in the embodiment.

In other embodiments, the above trigger condition may be: determining that a resource state of a CG PUSCH resource supporting the SDT process is in an unavailable state.

In a possible implementation, in response to identifying reselection from a cell that supports the CG PUSCH resource to a cell that does not support the CG PUSCH resource, it is determined that the resource state of the CG PUSCH resource that supports the SDT process is in the unavailable state. That is, in response to identifying reselection from a cell that supports an SDT CG resource to a cell that does not support the SDT CG resource, it is determined that the resource state of the CG PUSCH resource that supports the SDT process is in the unavailable state.

In another possible implementation, in response to identifying invalidity of an uplink timing advance (TA) of the CG PUSCH resource, it is determined that the resource state of the CG PUSCH resource supporting the SDT process is in the unavailable state.

As another possible implementation, the above trigger condition may be: determining that the amount of transmitted data corresponding to a DRB in the SDT process reaches the second threshold and the signal quality corresponding to a cell or a beam supporting the SDT process reaches the third threshold.

For example, the network device instructs the terminal device to trigger the SDT process as follows. The RSRP of a cell-1 being greater than or equal to a threshold-1 is satisfied, and the amount of the uplink data needs to be less than or equal to 1000 bytes. If the uplink data of 500 bytes arrives at an SDT DRB-1 of the terminal device and the RSRP of the cell-1 exceeds the threshold-1, the terminal device triggers the SDT process. However, before the uplink data of the SDT process is successfully sent, if the RSRP of the cell-1 of the terminal device is detected to be less than the threshold-1, it is determined that the trigger condition for rolling back from the SDT process to the non-SDT process is satisfied.

For another example, the network device instructs the terminal device to trigger the SDT process as follows. The RSRP of a beam-1 being greater than or equal to the threshold-1 is satisfied, and the amount of the uplink data needs to be less than or equal to 1000 bytes. If the uplink data of 500 bytes arrives at the SDT DRB-1 of the terminal device and the RSRP of the beam-1 exceeds the threshold-1, the terminal device triggers the SDT process. However, before the uplink data of the SDT process is successfully sent, if the RSRP of the beam-1 of the terminal device is detected to be less than the threshold-1, it is determined that the trigger condition for rolling back from the SDT process to the non-SDT process is satisfied.

It should be noted that this embodiment is only an exemplary description of the above trigger condition, and in actual application, other trigger conditions can be set according to actual business requirements, which is not specifically limited in the embodiments.

In the embodiments of the disclosure, during the SDT process performed by the terminal device, the terminal device rolls back from the SDT process to the non-SDT process when it is determined that the specified trigger condition is satisfied, so that the terminal device can roll back from the SDT process to the non-SDT process before the SDT process is completed. Therefore, the terminal device carries out data transmission based on the non-SDT process, which contributes to reducing the traffic transmission delay.

As illustrated in FIG. 3, FIG. 3 is a flowchart of a processing method for rolling back from an SDT process to a non-SDT process provided by another embodiment of the disclosure. The method is applied to the terminal device in the communication system shown in FIG. 1. As illustrated in FIG. 3, the method may include, but is not limited to, the following steps.

At step S301, in response to satisfying a specified trigger condition during the SDT process, connection configuration corresponding to the SDT process is processed according to a connection configuration requirement of the non-SDT process.

In some embodiments, small data can be transmitted to the network device during the SDT process via the third message Msg3 in the four-step random access process.

In some embodiments, small data can be transmitted to the network device during the SDT process via the first message MsgA in the two-step random access process.

In some embodiments, during the SDT process, small data can be transmitted to the network device via a CG PUSCH resource.

The CG PUSCH resource can be pre-configured by the network device for the terminal device.

The above specified trigger condition is a condition that triggers a rollback from the SDT process to the non-SDT process.

In some embodiments, the above trigger condition may be: receiving indication information sent by the network device, in which the indication information is configured to instruct the terminal device to roll back from the SDT process to the non-SDT process.

In other embodiments, the above trigger condition may be: determining that a number of data transmissions in the SDT process reaches a first threshold.

In a possible implementation, the above first threshold may be configured by the network device for the terminal device, or may be determined by the terminal device based on a communication standard used for communication with the network device. The method of obtaining the first threshold in not specifically limited in the embodiments.

In other embodiments, the above trigger condition may be: determining that an amount of transmitted data corresponding to a DRB in the SDT process reaches a second threshold.

The above DRB is configured to send traffic data of the terminal device.

For example, the network configures that the SDT can be selected to send uplink data of DRB-1, the amount of the uplink data needs to be less than or equal to 1000 bytes (i.e., the second threshold). If the uplink data of 500 bytes has arrived at the DRB-1, the SDT process can be selected. However, if before the uplink data of the SDT process is successfully sent, additional data of 600 bytes arrives at the DRB-1, and in this case, the amount of data to be sent by the DRB-1 is 1100 bytes, which exceeds 1000 bytes configured by the network, i.e., exceeds the second threshold configured by the network, and thus it can be determined that the trigger condition of rolling back from the SDT process to the non-SDT process is satisfied.

It is understood that in order to support data sending and receiving of the terminal device, different types of data may be sent and received via different RBs.

The RB in the embodiment may include the DRB and the SRB.

The above SRB is configured to send an RRC control signaling.

The SRBs can be classified into SRB0, SRB1, SRB2 and SRB3.

The SRB0 is configured to send an RRC message of a CCCH.

The SRB1 is configured to send an RRC message of a DCCH, which can carry a NAS message. It is also configured to send a NAS message before the SRB2 is established.

The SRB2 is configured to send a NAS message of a DCCH logical channel and an RRC message containing path measurement information.

It should be noted that the above SRB2 has a lower priority than the SRB 1 and is configured by the network side after the AS is activated safely.

The SRB3 is configured to send the RRC message of the DCCH logical channel of an SCG when the terminal device is configured with a non-independent networking mode. The above non-independent networking mode may include an EN-DC with 4G as a primary node and 5G as a secondary node, and an NR-DC with 5G as the primary node and 4G as the secondary node.

In a possible implementation, the above second threshold may be configured by the network device for the terminal device, or may be determined by the terminal device based on a communication standard used for communication with the network device. The method of obtaining the second threshold in not specifically limited in the embodiment.

In other embodiments, a signal quality corresponding to a cell or a beam supporting the SDT process reaches a third threshold.

In a possible implementation, the above third threshold may be configured by the network device for the terminal device, or may be determined by the terminal device based on a communication standard used for communication with the network device. The method of obtaining the third threshold in not specifically limited in the embodiment.

In some embodiments, the signal quality described above may be an RSRP.

In other embodiments, a signal strength corresponding to a cell or a beam supporting the SDT process reaches a fourth threshold.

In some embodiments, the above signal strength may be an RSRP.

In a possible implementation, the above beam may be determined based on SSB information.

In another possible implementation, the above beam may be determined based on CSI-RS information.

In another possible implementation, the above beam may be determined based on SSB information and CSI-RS information.

As an exemplary implementation, the network device may send configuration information to the terminal device. The configuration information may include SSB information and/or CSI-RS information. Correspondingly, the terminal device may determine the corresponding beam based on the SSB information and/or CSI-RS information.

In a possible implementation, the above fourth threshold may be configured by the network device for the terminal device, or may be determined by the terminal device based on a communication standard used for communication with the network device. The method of obtaining the fourth threshold in not specifically limited in the embodiment.

In other embodiments, the above trigger condition may be: determining that a resource state of a CG PUSCH resource supporting the SDT process is in an unavailable state.

In a possible implementation, in response to identifying reselection from a cell that supports the CG PUSCH resource to a cell that does not support the CG PUSCH resource, it is determined that the resource state of the CG PUSCH resource that supports the SDT process is in the unavailable state. That is, in response to identifying reselection from a cell that supports an SDT CG resource to a cell that does not support the SDT CG resource, it is determined that the resource state of the CG PUSCH resource that supports the SDT process is in the unavailable state.

In another possible implementation, in response to identifying invalidity of an uplink TA of the CG PUSCH resource, it is determined that the resource state of the CG PUSCH resource supporting the SDT process is in the unavailable state.

As another possible implementation, the above trigger condition may be: determining that the amount of transmitted data corresponding to a DRB in the SDT process reaches the second threshold, and determining that the signal quality corresponding to a cell or a beam supporting the SDT process reaches the third threshold.

For example, the network device instructs the terminal device to trigger the SDT process as follows. The RSRP of a cell-1 being greater than or equal to a threshold-1 is satisfied, and the amount of the uplink data needs to be less than or equal to 1000 bytes. If the uplink data of 500 bytes arrives at an SDT DRB-1 of the terminal device and the RSRP of the cell-1 exceeds the threshold-1, the terminal device triggers the SDT process. However, before the uplink data of the SDT process is successfully sent, if the RSRP of the cell-1 of the terminal device is detected to be less than the threshold-1, it is determined that the trigger condition for rolling back from the SDT process to the non-SDT process is satisfied.

For another example, the network device instructs the terminal device to trigger the SDT process as follows. The RSRP of a beam-1 being greater than or equal to the threshold-1 is satisfied, and the amount of the uplink data needs to be less than or equal to 1000 bytes. If the uplink data of 500 bytes arrives at the SDT DRB-1 of the terminal device and the RSRP of the beam-1 exceeds the threshold-1, the terminal device triggers the SDT process. However, before the uplink data of the SDT process is successfully sent, if the RSRP of the beam-1 of the terminal device is detected to be less than the threshold-1, it is determined that the trigger condition for rolling back from the SDT process to the non-SDT process is satisfied.

It should be noted that this embodiment is only an exemplary description of the above trigger condition, and in actual application, other trigger conditions can be set according to actual business requirements, which is not specifically limited in the embodiments.

In the embodiments of the disclosure, during the SDT process performed by the terminal device, after the rollback from the SDT process to the non-SDT process is triggered, i the connection configuration of the SDT process is processed based on the connection configuration requirement of the non-SDT process, so that the terminal device can roll back from the SDT process to the non-SDT process before the SDT process is completed. Therefore, the terminal device carries out data transmission based on the non-SDT process, which contributes to reducing the traffic transmission delay.

In some embodiments, processing the connection configuration corresponding to the SDT process according to the connection configuration requirement of the non-SDT process, includes at least one of the following processing actions:
processing an RB for resuming a data transmission in the SDT process according to an RB requirement of the non-SDT process;
resetting a MAC entity corresponding to the SDT process according to a MAC entity requirement of the non-SDT process;
restarting a timer used in the SDT process or starting a new timer, according to a timer requirement of the non-SDT process; or
processing a connection resume request message corresponding to the SDT process, according to a connection resume request message requirement of the non-SDT process.

It is noted that the above resetting the MAC entity may stop the behavior, such as performing the random access process, in the MAC entity, so that the terminal device may be able to re-initiate a connection establishment resume.

In the embodiments, during the SDT process, when rolling back from the SDT process to the non-SDT process, the connection configuration of the SDT process is processed, which can avoid data loss of traffic data due to the rollback operation, and improve the quality of data transmission.

As illustrated in FIG. 4, FIG. 4 is a flowchart of a processing method for rolling back from an SDT to a non-SDT provided by an embodiment of the disclosure. The method is applied to the terminal device in the communication system shown in FIG. 1. As illustrated in FIG. 4, the method may include, but is not limited to, the following steps.

At step S401, in response to satisfying a trigger condition of rolling back from the SDT process to the non-SDT process during the SDT process, an RB for resuming a data transmission in the SDT process is processed according to an RB requirement of the non-SDT process.

It should be noted that with regard to the trigger condition, reference can be made to the relevant descriptions of the above embodiments, which will not be repeated herein.

In the embodiments, during the SDT process, when rolling back from the SDT process to the non-SDT process, the RB for resuming the data transmission in the SDT process is processed according to the RB requirement of the non-SDT process, which can avoid data loss of traffic data due to the rollback operation, and improve the quality of data transmission.

In some embodiments, the above RB requirement may be suspending the RB.

In an exemplary embodiment, the RB requirement may be suspending a PDCP entity and a Radio Link Control (RLC) entity of the RB.

In another exemplary embodiment, the above RB requirement may be processing the PDCP entity of the RB.

In some embodiments, in a possible implementation, processing the PDCP entity of the RB includes: re-establishing the PDCP entity of the RB according to PDCP entity configuration information corresponding to the non-SDT process.

As an example, in response to a transmission mode corresponding to the RB being an unacknowledged mode (UM), re-establishing the PDCP entity of the RB includes: for each PDCP service data unit (SDU) that is associated with a PDCP serial number (SN) and has not yet been delivered to an underlying protocol entity, processing the PDCP SDU as being received from a higher layer at the first time, and performing transmission in an ascending order according to a COUNT value associated with the PDCP SDU. For a running discard timer associated with the PDCP SDU, it continues to run (i.e., the discard timer is not restarted), so that the data that has not yet been sent in the SDT process can be transmitted continuously in the non-SDT process, to avoid data loss.

As another example, for a suspended DRB in an RLC acknowledged mode (AM) mode, re-establishing the PDCP entity of the RB includes: for each PDCP SDU associated with a PDCP SN, starting from the first PDCP SDU that has not been confirmed to be successfully sent by the underlying protocol entity, processing the PDCP SDU as being received from the higher layer at the first time, and performing transmission in an ascending order according to the COUNT value associated with the PDCP SDU. For the running discard timer associated with the PDCP SDU, it continues to run (i.e., the discard timer is not restarted), so that the data that has not yet been sent in the SDT process can be transmitted continuously in the non-SDT process, to avoid data loss.

As yet another example, for a non-suspended DRB in the RLC AM mode, re-establishing the PDCP entity of the RB includes: for each PDCP SDU associated with a PDCP SN, transmitting all PDCP SDUs (i.e., starting from the first PDCP SDU that has not been configured to be successfully sent by the underlying protocol entity, including PDCP SDUs that have not been configured to be successfully sent by the underlying protocol entity and PDCP SDUs that have been configured to be successfully sent by the underlying protocol entity) in an ascending order according to the COUNT value associated with each PDCP SDU.

In other embodiments, in a possible implementation, processing the PDCP entity of the RB includes:
in response to an RRC connection being established in the non-SDT process, transmitting data packets of the PDCP entity of the RB.

In the embodiment, the RRC connection being established in the non-SDT process includes any of the followings: a random access process being successfully completed; a connection resume (RRC Resume) message being received; and a connection establishment (RRC Setup) message being received.

As an exemplary embodiment, when the terminal device starts sending an RRC connection resume request message, the timer starts timing, and if, during the running of the timer, the terminal device receives the RRC Resume message or the RRC Setup message from the network device side, it is determined that the terminal device has established the RRC connection.

Optionally, in a possible implementation, transmitting the data packets of the PDCP entity of the RB includes: in response to a transmission mode corresponding to the RB being an UM, transmitting a data packet not sent yet in the data packets of the PDCP entity of the RB.

In the embodiment, the data packet not sent yet in the SDT process is transmitted in the non-SDT process, to avoid data loss and improve the quality of data transmission.

Optionally, in another possible implementation, transmitting the data packets of the PDCP entity of the RB includes: in response to the transmission mode corresponding to the RB being an AM, transmitting a data packet not sent yet and/or a data packet already sent but not confirmed to be successfully received in the data packets of the PDCP entity of the RBs.

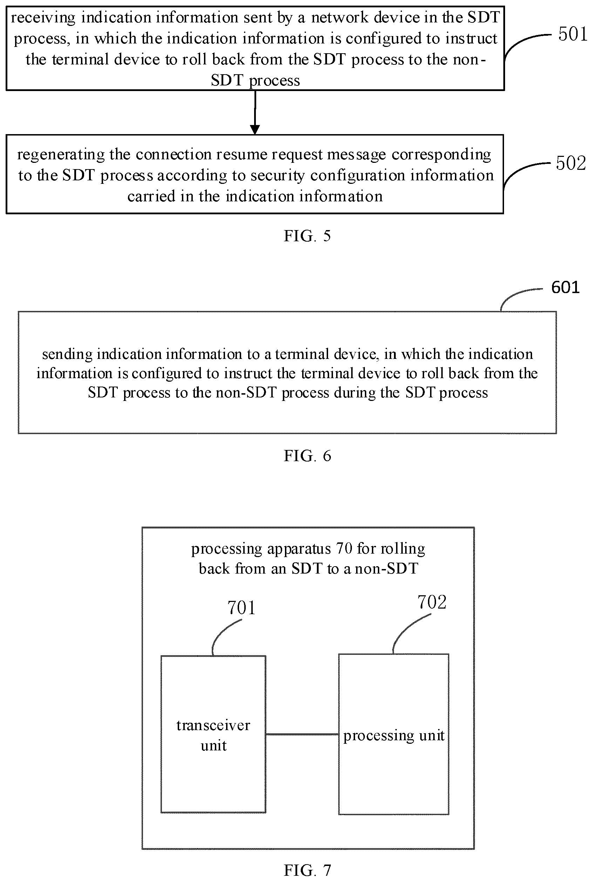

As illustrated in FIG. 5, FIG. 5 is a flowchart of a processing method for rolling back from an SDT to a non-SDT provided by another embodiment of the disclosure. The method is applied to the terminal device in the communication system shown in FIG. 1. As illustrated in FIG. 5, the method may include, but is not limited to, the following steps.

At step S501, indication information sent by a network device is received during the SDT process, in which the indication information is configured to instruct the terminal device to roll back from the SDT process to the non-SDT process.

At step S502, a connection resume request message corresponding to the SDT process is regenerated according to security configuration information carried in the indication information.

That is, in addition to the instruction to roll back from the SDT process to the non-SDT process, the indication information in this embodiment also carries the security configuration information.

In some embodiments, the security configuration information includes at least one of the followings: a security algorithm, a security key, a next hop chaining count for updating the security key, or a next hop count for updating the security key.

It is understood that, based on the above step S502, the method in the embodiment may also include at least one of the following steps: processing an RB for resuming a data transmission in the SDT process according to an RB requirement of the non-SDT process; resetting a MAC entity corresponding to the SDT process according to a MAC entity requirement of the non-SDT process; or restarting a timer used in the SDT process or starting a new timer, according to a timer requirement of the non-SDT process.

In another exemplary implementation, in response to satisfying a specified trigger condition of rolling back from the SDT process to the non-SDT process during the SDT process, a connection resume request message corresponding to the SDT process is reused according to a connection resume request message requirement of the non-SDT process. That is, when rolling back to the non-SDT process, in case of performing RRC connection resume on the terminal device, the connection resume request message corresponding to the SDT process can be used to perform RRC connection resume, so as to realize connection resume of the non-SDT process.

As an exemplary implementation, during the SDT process performed by the terminal device, the terminal device can store the connection resume request message generated in the SDT process in the cache. In response to detecting that the trigger condition of rolling back from the SDT process to the non-SDT process is triggered, the terminal device can read the connection resume request message available in the previous SDT process from the cache and perform RRC connection resume based on the read-out connection resume request message during the non-SDT process as well, and perform data transmission based on the resumed RRC connection.

In an exemplary implementation, in addition to reusing the connection resume request message corresponding to the SDT process according to the connection resume request message requirement of the non-SDT process, at least one of the followings may be included: processing an RB for resuming a data transmission in the SDT process according to an RB requirement of the non-SDT process; resetting a MAC entity corresponding to the SDT process according to a MAC entity requirement of the non-SDT process; or restarting a timer used in the SDT process or starting a new timer, according to a timer requirement of the non-SDT process.

It should be noted that the above trigger condition can be referred to the relevant descriptions of the other embodiments described above and will not be repeated in this embodiment.

As illustrated in FIG. 6, FIG. 6 is a flowchart of a processing method for rolling back from an SDT to a non-SDT provided by another embodiment of the disclosure. The method is applied to the network device in the communication system shown in FIG. 1. As illustrated in FIG. 6, the method may include, but is not limited to, the following steps.

At step S601, indication information is sent to a terminal device, in which the indication information is configured to instruct the terminal device to roll back from the SDT process to the non-SDT process while in the SDT process.

In the embodiment of the disclosure, the network device instructs the terminal device to roll back from the SDT process to the non-SDT process while the terminal device is in the SDT process, so that the terminal device can roll back from the SDT process to the non-SDT process before the SDT process is completed. Therefore, the terminal device can carry out data transmission based on the non-SDT process, which is conducive to reducing the traffic transmission delay.

Based on the above embodiment, in order to further enhance a communication security during the SDT process performed by the terminal device, the above indication information may also include security configuration information.

Correspondingly, the terminal device may determine a connection resume request message used in the non-SDT process based on the security configuration information.

As another exemplary implementation, the terminal device may generate a new security key based on the security configuration information indicated by the network device, and determine the connection resume request message used in the non-SDT process based on the new security key.

In some embodiments, the above security configuration information may include at least one of the followings: a security algorithm, a security key, a next hop chaining count for updating the security key, or a next hop count for updating the security key.

In the above embodiments provided by the disclosure, the methods provided by the embodiments of the disclosure are introduced from the perspectives of a network device and a terminal device respectively. In order to implement each function in the method provided by the above embodiments of the disclosure, the network device and the terminal device may include a hardware structure and a software module to implement the above functions in the form of a hardware structure, a software module, or a combination thereof. A certain function in the above functions can be executed by a hardware structure, a software module, or a combination thereof.

As illustrated in FIG. 7, FIG. 7 is a block diagram of a processing apparatus 70 for rolling back from an SDT to a non-SDT provided by an embodiment of the disclosure. The apparatus 70 shown in FIG. 7 may include a transceiver unit 701 and a processing unit 702. The transceiver unit 701 may include a sending unit and/or a receiving unit. The sending unit is configured to realize a transmitting function, and the receiving unit is configured to realize a receiving function. The transceiver unit 701 may realize the transmitting function and/or the receiving function.

The apparatus 70 may be a network device, an apparatus in the network device, or a device that can be used in combination with the network device. Alternatively, the apparatus 70 may be a terminal device, an apparatus in the terminal device, or a device that can be used in combination with the terminal device.

The apparatus 70 may be a terminal device. The processing module 701 is configured to, in response to satisfying a specified trigger condition during the SDT process, roll back from the SDT process to the non-SDT process.

In a possible implementation, the processing module 701 is further configured to: process connection configuration corresponding to the SDT process according to a connection configuration requirement of the non-SDT process.

In a possible implementation, the processing module 701 is further configured to execute at least one of the following processing actions:
processing an RB for resuming a data transmission in the SDT process according to an RB requirement of the non-SDT process;
resetting a MAC entity corresponding to the SDT process according to a MAC entity requirement of the non-SDT process;
restarting a timer used in the SDT process or starting a new timer, according to a timer requirement of the non-SDT process; or
processing a connection resume request message corresponding to the SDT process according to a connection resume request message requirement of the non-SDT process.

In an optional implementation, the RB requirement includes any one of the followings: suspending the RB; or processing the PDCP entity of the RB.

In an exemplary implementation, the PDCP entity and the RLC entity of the RB can be suspended.

In an optional implementation, processing the PDCP entity of the RB, includes any one of the followings: re-establishing the PDCP entity of the RB according to PDCP entity configuration information corresponding to the non-SDT process; or in response to an RRC connection being established in the non-SDT process, transmitting data packets of the PDCP entity of the RB.

In an optional implementation, transmitting the data packets of the PDCP entity of the RB, includes any one of the followings: in response to a transmission mode corresponding to the RB being an UM, transmitting a data packet not sent yet in the data packets of the PDCP entity of the RB; or in response to a transmission mode corresponding to the RB being an AM, transmitting a data packet not sent yet and/or a data packet already sent but not confirmed to be successfully received in the data packets of the PDCP entity of the RB.

In an optional implementation, the connection resume request message requirement includes any one of the followings: regenerating the connection resume request message corresponding to the SDT process according to security configuration information; or reusing the connection resume request message used in the SDT process.

In an optional implementation, the trigger condition includes any one of the followings:
receiving indication information sent by a network device, in which the indication information is configured to instruct the terminal device to roll back from the SDT process to the non-SDT process;
determining that a number of data transmissions in the SDT process reaches a first threshold;
determining that an amount of transmitted data corresponding to a data radio bearer in the SDT process reaches a second threshold;
determining that a signal quality corresponding to a cell or a beam supporting the SDT process reaches a third threshold;
determining that a signal strength corresponding to a cell or a beam supporting the SDT process reaches a fourth threshold; or
determining that a resource state of a CG PUSCH resource that supports the SDT process is in an unavailable state.

In an embodiment of the disclosure, determining that the resource state of the CG PUSCH resource that supports the SDT process is in the unavailable state, includes any one of the followings:
in response to identifying reselection from a cell that supports the CG PUSCH resource to a cell that does not support the CG PUSCH resource, determining that the resource state of the CG PUSCH resource that supports the SDT process is in the unavailable state; or
in response to identifying invalidity of an uplink timing advance of the CG PUSCH resource, determining that the resource state of the CG PUSCH resource that supports the SDT process is in the unavailable state.

In a possible implementation, the indication message further includes the security configuration information.

In a possible implementation, the security configuration information includes at least one of the followings: a security algorithm, a security key, a next hop chaining count for updating the security key, or a next hop count for updating the security key.

The apparatus 70 may be a network device. The transceiver unit 702 is configured to send indication information to a terminal device, in which the indication information is configured to instruct the terminal device to roll back from the SDT process to the non-SDT process while in the SDT process.

In a possible implementation, the indication information further includes security configuration information.

In a possible implementation, the security configuration information includes at least one of the followings: a security algorithm, a security key, a next hop chaining count for updating the security key, or a next hop count for updating the security key.

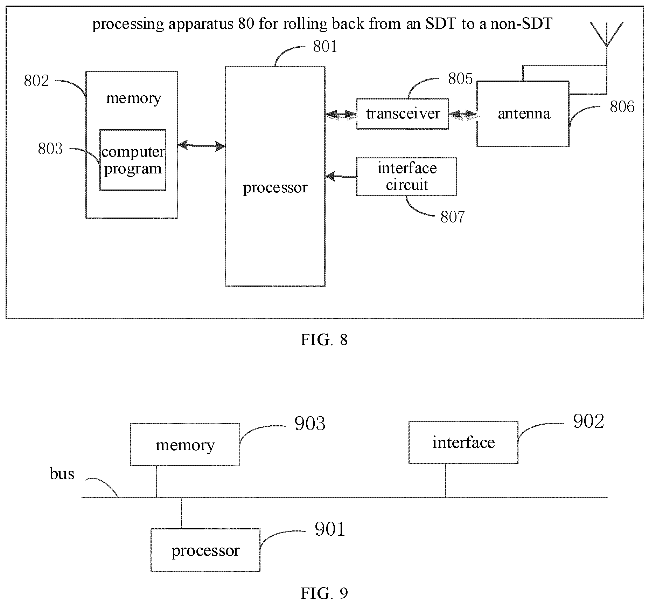

As illustrated in FIG. 8, FIG. 8 is a block diagram of a processing apparatus 80 for rolling back from an SDT to a non-SDT provided by another embodiment of the disclosure. The apparatus 80 may be a network device, a terminal device, or a chip, a chip system or a processor that supports the network device to realize the above-described methods, or a chip, a chip system or a processor that supports the terminal device to realize the above-described methods. The apparatus may be used to realize the methods described in the above method embodiments with reference to the description of the above-described method embodiments.

The apparatus 80 may include one or more processors 801. The processor 801 may be a general purpose processor or a dedicated processor, such as, a baseband processor and a central processor. The baseband processor is used for processing communication protocols and communication data. The central processor is used for controlling the apparatus 80 (e.g., base station, baseband chip, terminal device, terminal device chip, DU, or CU) to execute computer programs and process data of the computer programs.

Optionally, the apparatus 80 may include one or more memories 802 on which computer programs 803 may be stored. The processor 801 executes the computer programs 803 to cause the apparatus 80 to perform the methods described in the above method embodiments. The computer programs 803 may be cured in the processor 801, in which case the processor 801 may be implemented by hardware.

Optionally, the memory 802 may also store data. The apparatus 80 and the memory 802 may be provided separately or may be integrated together.

Optionally, the apparatus 80 may also include a transceiver 805 and an antenna 806. The transceiver 805 may be referred to as transceiver unit, transceiver machine, or transceiver circuit, for realizing a transceiver function. The transceiver 805 may include a receiver and a transmitter. The receiver may be referred to as receiver machine or receiving circuit, for realizing a receiving function. The transmitter may be referred to as transmitter machine or transmitting circuit, for realizing a transmitting function.

Optionally, the apparatus 80 may also include one or more interface circuits 807. The interface circuit 807 is configured to receive code instructions and transmit them to the processor 801. The processor 801 runs the code instructions to cause the apparatus 80 to perform the method described in the method embodiments.

The apparatus 80 is a terminal device. The processor 801 is used to perform step S201 in FIG. 2, step S301 in FIG. 3, step S401 in FIG. 4, and step S501 and step S502 in FIG. 5. The transceiver 805 is used to perform step S601 in FIG. 6.

In an implementation, the processor 801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for reading and writing code/data, or may be used for signal transmission or delivery.

In an implementation, the apparatus 80 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC processing technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The apparatus in the above description of embodiments may be a network device or a terminal device, but the scope of the device described in the disclosure is not limited thereto, and the structure of the apparatus may not be limited by FIG. 8. The apparatus may be a stand-alone device or may be part of a larger device. For example, the apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the apparatus may be a chip or a chip system is described with reference to the schematic structure of the chip shown in FIG. 9. The chip shown in FIG. 9 includes a processor 901 and an interface 902. There may be one or more processors 901 and multiple interfaces 902.

In the case where the chip is used to implement the function of the network device in the embodiment of the disclosure,
the interface 902 is configured to receive code instructions and transmit them to the processor 901; and
the processor 901 is configured to run the code instructions to perform the method as in FIGS. 2 to 5.
In the case where the chip is used to implement the function of the terminal device in the embodiment of the disclosure,
the interface 902 is configured to receive code instructions and transmit them to the processor 901; and
the processor 901 is configured to run the code instructions to perform the method shown in FIG. 6.

Optionally, the chip further includes a memory 903 used to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the specific application and overall system design requirements. Those skilled in the art may, for each specific application, use various methods to implement the described function, but such implementation should not be understood as beyond the scope of protection of the embodiments of the disclosure.

The embodiments of the disclosure also provide a communication system. The system includes an apparatus configured as a terminal device and an apparatus configured as a network device in the aforementioned embodiment of FIG. 7. Alternatively, it includes an apparatus configured as a terminal device and an apparatus configured as a network device in the aforementioned embodiment of FIG. 8.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any one of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When the computer programs are loaded and executed on the computer, all or part of processes or functions described in the embodiments of the disclosure are implemented. The computer may be a general-purpose computer, a dedicated computer, a computer network, or other programmable devices. The computer programs may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium can be any available media that can be accessed by a computer or a data storage device such as a server, a data center, or other integrated medium that contains one or more available mediums. The available medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understands that first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for technical features, "first", "second", and "third", and "A", "B", "C" and "D" are used to distinguish different technical features, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured as other values, which are not limited by the disclosure. In configuring the correspondence between information and each parameter, it is not necessarily required to configure all the correspondences illustrated in the tables. For example, the correspondences illustrated in some rows in the tables of this disclosure may not be configured. For another example, the above tables may be adjusted appropriately, for example, by splitting, combining, or the like. The names of the parameters shown in the headings of the above tables may be other names that can be understood by the communication device, and the values or representations of the parameters may be other values or representations that can be understood by the communication device. Each table may also be implemented with other data structures, such as, arrays, queues, containers, stacks, linear tables, pointers, chained lists, trees, graphs, structures, classes, heaps, and Hash tables.

The term "predefine" in this disclosure may be understood as define, predefine, store, pre-store, pre-negotiate, pre-configure, cure, or pre-burning.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solutions. Those skilled in the art may use different methods to implement the described functions for each application, but such implementations should not be considered as beyond the scope of the disclosure.

It is clearly understood by those skilled in the art to which it belongs that, for the convenience and brevity of description, the specific operating processes of the systems, apparatuses, and units described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A processing method for rolling back from a small data transmission (SDT) process to a non-SDT process, performed by a terminal device, comprising:
in response to satisfying a specified trigger condition during the SDT process, rolling back from the SDT process to the non-SDT process.

2. The processing method of claim 1, wherein rolling back from the SDT process to the non-SDT process comprises:
processing connection configuration corresponding to the SDT process according to a connection configuration requirement of the non-SDT process.

3. The processing method of claim 2, wherein processing the connection configuration corresponding to the SDT process according to the connection configuration requirement of the non-SDT process, comprises at least one of the following processing actions:
processing a radio bearer (RB) for resuming a data transmission in the SDT process according to an RB requirement of the non-SDT process;
resetting a medium access control (MAC) entity corresponding to the SDT process according to a MAC entity requirement of the non-SDT process;
restarting a timer used in the SDT process or starting a new timer, according to a timer requirement of the non-SDT process; or
processing a connection resume request message corresponding to the SDT process according to a connection resume request message requirement of the non-SDT process.

4. The processing method of claim 3, wherein the RB requirement comprises any one of the followings:
suspending the RB; or
processing a Packet Data Convergence Protocol (PDCP) entity of the RB.

5. The processing method of claim 4, wherein processing the PDCP entity of the RB, comprises any one of the followings:
re-establishing the PDCP entity of the RB according to PDCP entity configuration information corresponding to the non-SDT process; or
in response to a radio resource control (RRC) connection being established in the non-SDT process, transmitting data packets of the PDCP entity of the RB.

6. The processing method of claim 5, wherein transmitting the data packets of the PDCP entity of the RB, comprises any one of the followings:
in response to a transmission mode corresponding to the RB being an unacknowledged mode (UM), transmitting a data packet not sent yet in the data packets of the PDCP entity of the RB; or
in response to a transmission mode corresponding to the RB being an acknowledged mode, transmitting a data packet not sent yet and/or a data packet already sent but not confirmed to be successfully received in the data packets of the PDCP entity of the RB.

7. The processing method of claim 3, wherein the connection resume request message requirement comprises any one of the followings:
regenerating the connection resume request message corresponding to the SDT process according to security configuration information; or
reusing the connection resume request message used in the SDT process.

8. The processing method of any one of claims 1-7, wherein the trigger condition comprises any one of the followings:
receiving indication information sent by a network device, wherein the indication information is configured to instruct the terminal device to roll back from the SDT process to the non-SDT process;
determining that a number of data transmissions in the SDT process reaches a first threshold;
determining that an amount of transmitted data corresponding to a data radio bearer in the SDT process reaches a second threshold;
determining that a signal quality corresponding to a cell or a beam supporting the SDT process reaches a third threshold;
determining that a signal strength corresponding to a cell or a beam supporting the SDT process reaches a fourth threshold; or
determining that a resource state of a configured grant (CG) physical uplink shared channel (PUSCH) resource that supports the SDT process is in an unavailable state.

9. The processing method of claim 8, wherein determining that the resource state of the CG PUSCH resource that supports the SDT process is in the unavailable state, comprises any one of the followings:
in response to identifying reselection from a cell that supports the CG PUSCH resource to a cell that does not support the CG PUSCH resource, determining that the resource state of the CG PUSCH resource that supports the SDT process is in the unavailable state; or
in response to identifying invalidity of an uplink timing advance of the CG PUSCH resource, determining that the resource state of the CG PUSCH resource that supports the SDT process is in the unavailable state.

10. The processing method of claim 8, wherein the indication message further comprises the security configuration information.

11. The processing method of claim 10, wherein the security configuration information comprises at least one of the followings: a security algorithm, a security key, a next hop chaining count for updating the security key, or a next hop count for updating the security key.

12. A processing method for rolling back from a small data transmission (SDT) process to a non-SDT process, performed by a network device, comprising:
sending indication information to a terminal device, wherein the indication information is configured to instruct the terminal device to roll back from the SDT process to the non-SDT process during the SDT process.

13. The processing method of claim 12, wherein the indication message further comprises security configuration information.

14. The processing method of claim 12, wherein the security configuration information comprises at least one of the followings: a security algorithm, a security key, a next hop chaining count for updating the security key, or a next hop count for updating the security key.

15. A processing method for rolling back from a small data transmission (SDT) process to a non-SDT process, applied to a terminal device, comprising:
a processing unit, configured to, in response to satisfying a specified trigger condition during the SDT process, roll back from the SDT process to the non-SDT process.

16. A processing method for rolling back from a small data transmission (SDT) process to a non-SDT process, executed by a network device, comprising:
a transceiver unit, configured to send an indication message to a terminal device, wherein the indication message is configured to instruct the terminal device to roll back from the SDT process to the non-SDT process during the SDT process.

17. A processing apparatus for rolling back from a small data transmission (SDT) process to a non-SDT process, comprising a processor and a memory having computer programs stored thereon, wherein when the computer programs are executed by the processor, the processing apparatus is caused to implement the method of any one of claims 1 to 11.

18. A processing apparatus for rolling back from a small data transmission (SDT) process to a non-SDT process, comprising a processor and a memory having computer programs stored thereon, wherein when the computer programs are executed by the processor, the processing apparatus is caused to implement the method of any one of claims 12 to 14.

19. A processing apparatus for rolling back from a small data transmission (SDT) process to a non-SDT process, comprising a processor and an interface circuit,
wherein the interface circuit is configured to receive code instructions and transmit them to the processor, and
the processor is configured to run the code instructions to implement the method of any one of claims 1 to 11.

20. A processing apparatus for rolling back from a small data transmission (SDT) process to a non-SDT process, comprising a processor and an interface circuit,
wherein the interface circuit is configured to receive code instructions and transmit them to the processor, and
the processor is configured to run the code instructions to implement the method of any one of claims 12 to 14.

21. A computer readable storage medium having instructions stored thereon, wherein when the instructions are executed, the method of any one of claims 1 to 11 is implemented.

22. A computer readable storage medium having instructions stored thereon, wherein when the instructions are executed, the method of any one of claims 12 to 14 is implemented.
